## Europäisches Patentamt
## European Patent Office
## Office européen des brevets

(11) Veröffentlichungsnummer: **0 118 021**
**B1**

# EUROPÄISCHE PATENTSCHRIFT

(45) Veröffentlichungstag der Patentschrift:
04.01.89

(21) Anmeldenummer: 84100987.1

(22) Anmeldetag: 01.02.84

(51) Int. Cl.⁴: **B 01 D 17/02,** C 02 F 1/40,
E 03 F 5/16

(54) Leichtflüssigkeitsabscheider.

(30) Priorität: 03.02.83 DE 3303632

(43) Veröffentlichungstag der Anmeldung:
12.09.84 Patentblatt 84/37

(45) Bekanntmachung des Hinweises auf die Patenterteilung:
04.01.89 Patentblatt 89/1

(84) Benannte Vertragsstaaten:
AT BE CH DE FR GB IT LI LU NL SE

(56) Entgegenhaltungen:
EP-A-0 016 517
EP-A-0 037 855
EP-A-0 037 886
EP-A-0 047 535
EP-A-0 054 793

(73) Patentinhaber: Hammerschmitt, Nikolaus, Kölner Strasse 138, D-5350 Euskirchen (DE)

(72) Erfinder: Hammerschmitt, Nikolaus, Kölner Strasse 138, D-5350 Euskirchen (DE)

(74) Vertreter: Dipl.- Ing. H. Hauck Dipl.- Phys. W. Schmitz Dipl.- Ing. E. Graalfs Dipl.- Ing. W. Wehnert Dr.- Ing. W. Döring, Mörikestrasse 18, D-4000 Düsseldorf 30 (DE)

## Beschreibung

Die vorliegende Erfindung betrifft einen Leichtflüssigkeitsabscheider mit den Merkmalen des Oberbegriffs des Patentanspruchs 1.

Ein solcher Leichtflüssigkeitsabscheider ist aus der EP-A-0 054 793 bekannt. Bei dem bekannten Leichtflüssigkeitsabscheider gelangt das zufließende Gemisch über einen Überströmkanal in die eigentliche Abscheidekammer, in der sich als Leichflüssigkeitsablauf eine glockenförmige, nach unten offene Leichtflüssigkeitswanne befindet, von der sich ein Steigrohr noch oben erstreckt. Die Schwerflüssigkeit unterströmt eine vertikal angeordnete Trennwand und gelangt über eine Schleusenwand in eine Haltekammer.

Der Erfindung liegt die Aufgabe zugrunde, einen Leichtflüssigkeitsabscheider der angegebenen Art zu schaffen, der bei einem besonders gleichmäßigen Durchgang auch bei geringem Zufluß gleichmäßig hohe Schwerflüssigkeitsspiegelschwankungen zur besseren Leichtflüssigkeitsabführung sichert.

Diese Aufgabe wird erfindungsgemäß bei einem Leichtflüssigkeitsabscheider der angegebenen Art durch die kennzeichnenden Merkmale des Patentanspruchs 1 gelöst.

Bei der erfindungsgemäßen Lösung ist eine kleine Durchflußöffnung in der Schleusenwand in der Nähe der Ablaufsole vorgesehen. Nach jedem Ruhezustand des Abscheiders kann somit Schwerflüssigkeit noch duch die Durchflußöffnung abfließen, so daß der Schwerflüssigkeitsspiegel auf das Niveau der Durchflußöffnung sinkt. Im Betrieb, d. h. bei Zufluß, steigt der Schwerflüssigkeitsspiegel soweit an, daß ein Ablauf über die Überlaufkante der Schleusenwand erfolgt. Die duchgangsabhängigen Schwankungen beginnen erst ab Schleusenüberlauf. Auf diese Weise werden somit die Schwerflüssigkeitsspiegelschwankungen künstlich erhöht, wobei jedesmal beim Ansteigen des Schwerflüssigkeitsspiegels die Leichtflüssigkeitsschicht mit angehoben und in das Steigrohr geführt wird. Die Höhe der Mindestschwankun gen ist somit auch bei geringsten Zuflüssen gleichbleibend.

Durch die künstlich erzeugte Erhöhung der Schwerflüssigkeitsspiegelschwankung entsteht ein ausreichender Abstand zwischen Leichtflüssigkeitsschicht und duchfließender Schwerflüssigkeit. Der Leichtflüssigkeitsablauf wird durch die entstehende höhere Leichtflüssigkeitssäule begünstigt. Die regulierten Schwerflüssigkeitsspiegelschwankungen werden somit für den Leichtflüssigkeitstransport nutzbar gemacht.

In der Abscheidekammer abgetrennte Leichtflüssigkeit, die von der Leichtflüssigkeitswanne nicht aufgenommen wird, sammelt sich während des Betriebes des Abscheiders als Leichtflüssigkeitsschicht auf der Schwerflüssigkeit an. Im darauffolgenden Ruhezustand sinkt der Schwerflüssigkeitsspiegel mit der Leichtflüssigkeitsschicht auf das Niveau der Durchflußöffnung ab, so daß dabei die Leichtflüssigkeitsschicht in die Leichtflüssigkeitswanne gelangt. Bei der nächsten Inbetriebnahme des Abscheiders wird diese Leichtflüssigkeitsschicht durch den wieder steigenden Schwerflüssigkeitsspiegel aus dem Steigrohr herausgedrückt. Durch die Wannenform mit nach unten in die Abscheidekammer ragenden Begrenzungswänden wird verhindert, daß Leichtflüssigkeit im oberen Bereich der Abscheidekammer von Schwerflussigkeit mitgeführt wird.

Durch die erfindungsgemäße Maßnahme der Anordnung einer einen Durchlaß für die Schwerflüssigkeit aufweisenden zwei- oder vierseitig schiefen Ebene wird der seitliche Inhalt der Abscheidekammer infolge der Schwerkraft zum Fließen gebracht und erzwingt sich seinen anteilmäßigen Ablauf durch den Durchlaß. Der vorhandene allseitige Gegenstau verhindert jedoch einen Durchbruch in der Mitte, so daß daher keine Kurzschlußströmungen stattfinden können. Somit wird durch die Anordnung der schiefen Ebene ein Abfließen der Schwerflüssigkeit in den seitlichen Bereichen der Abscheidekammer erreicht, jedoch verhindert, daß sich plötzlich auftretende Durchbrüche ergeben. Dadurch, daß die schiefe Ebene den seitlichen Mengeninhalt zum Abfließen bringt, wird ein Totwalzen verhindert.

Ergänzend zum Stand der Technik sei noch erwähnt, daß es aus der EP-A-0 047 535 bekannt ist, bei Leichtflüssigkeits abscheidern schiefe Ebenen vorzusehen.

Der erfindungsgemäß ausgebildete Abscheider verhindert somit ein Nichtabfließen in den seitlichen Bereichen der Abscheidekammer und stellt einen gleichmäßigen Durchgang sicher. Die Schleusenwand stellt einen ausreichenden freien Schwerflüssigkeitsfall über die gesamte Breite sicher, so daß sich Anstauungen im Ablauf nicht auf den Abscheider übertragen. Insgesamt wird somit ein gleichmäßiger Ablauf über die gesamte Breite des Abscheiders erreicht, wodurch Kurzschlußströmungen verhindert werden und die Aufenthaltsdauer des zufließenden Gemisches im Abscheider erhöht wird.

Zweckmäßigerweise weist auch der Zulauf eine sich über die gesamte Abscheidekammer erstreckende Zulaufschleusenwand auf, so daß auf diese Weise die Abscheidekammer auch über die gesamte Breite angeströmt wird. Dadurch werden die Strömungsverhältnisse weiter vergleichmäßigt, so daß der Wirkungsgrad des Abscheiders erhöht wird.

An der Ablaufseite der Schleusenwand ist vorzugsweise ein Sammelraum vorgesehen.

Falls erforderlich, kann der Leichtflüssigkeitsabscheider eine sich über die gesamte Breite der Abscheidekammer erstreckende Restabscheiderstufe zur Aufnahme von Filter- oder Ölbindematerial unmittelbar nach einer weiteren Trennwand der Abscheidekammer aufweisen.

In Weiterbildung der Erfindung besitzt der Leichtflüssigkeitsabscheider ein Leichtflüssigkeitssammelbecken, unter dem sich eine oder mehrere Leichtflüssigkeitswannen befinden. Die Leichtflüssigkeit gelangt über das Steigrohr in das Leichtflüssigkeitssammelbecken. Die darin befindliche Leichtflüssigkeit wird von den Schwerflüssigkeitsspiegelschwankungen nicht mehr beeinflußt. Ein großer Teil der Schwerflüssigkeitsoberfläche ist dadurch von der Leichtflüssigkeitsschicht befreit.

Dieses Leichtflüssigkeitssammelbecken reicht bei normalem Leichtflüssigkeitsanfall aus, um die anfallende Leichtflussigkeit aufzunehmen. Bei einem größeren Leichtflüssigkeitsanfall ist das Leichtflüssigkeitssammelbekken über eine Leitung mit einem Leichtflüssigkeitstank verbunden. In diesem Fall kann das Sammelbecken als Reservetank dienen. Ist der Leichtflussigkeitstank voll, füllt sich der Reservetank, wobei bei vollständigem Füllen über ein Schwimmerschalter oder eine Sonde Leichtflüssigkeitsalarm ausgelöst werden kann.

Zweckmäßigerweise weist der erfindungsgenäß ausgebildete Leichtflüssigkeitsabscheider einen Zulaufverteiler auf. Durch einen derartigen, am Zulaufrohr angeordneten Zulaufverteiler soll der Zufluß in gleichen Mengen auf die Breite des Abscheiders verteilt werden. Der Zulaufverteiler ist bei einer speziellen Ausführungsform als Verteilerstern ausgebildet und umfasst im einzelnen einen quer zum Zulaufrohr angeordneten Kasten, der sternförmig angeordnete, schräg nach unten geneigte Leitbleche aufweist. Die Leitbleche stoßen innerhalb der Querschnittsfläche des Zulaufrohres zusammen.

Der Zulaufverteiler ist vorzugsweise so ausgebildet, daß er das eintretende Flüssigkeitsgemisch um 360° umlenkt. Dabei tritt das Flüssigkeitsgemisch am unteren Ende des Verteilers etwa horizontal aus, und zwar in Gegenrichtung wie das einströmende Flüssigkeitsgemisch. Es findet durch die Leitbleche eine gleichmäßige Verteilung über die gesamte Breite des Abscheiders statt.

Der Zulaufverteiler ist beweglich mit dem Zulaufrohr verbunden, um Bewegungen des Zulaufrohres durch Erddruck, Wärmespannungen etc. aufnehmen zu können. Der Anschluß ist in entsprechender Weise abgedichtet, wobei stopfbüchsenartige Dichtungen zur Anwendung kommen können.

Was die vorgesehene schiefe Ebene anbetrifft, so sind bei einer Ausführungsform beide Hälften der Ebene etwa auf gleicher Höhe angeordnet. Alternativ dazu kann jedoch auch eine Hälfte der Ebene höhenversetzt zu der anderen Hälfte angeordnet sein, wobei die tiefer angeordnete Hälfte zweckmäßigerweise am Boden des Abscheiders aufliegt. Hierdurch wird eine bessere Raumausnutzung des Abscheiders möglich. Um den Durchlaß für die Schwerflüssigkeit vorzusehen, muß die eine Hälfte der schiefen Ebene immer im Abstand vom Boden des Abscheiders vorgesehen sein.

Zweckmäßigerweise ist beiderseits der Trennwand des Abscheiders jeweils eine schiefe Ebene vorgesehen. Dabei können die Hälften beider Ebenen entweder auf gleicher Höhe oder höhenversetzt angeordnet sein. Es können jedoch auch die Hälften einer Ebene höhenversetzt angeordnet sein, während sich die Hälften der anderen Ebene auf gleicher Höhe befinden.

Um den Wirkungsgrad des Leichtflüssigkeitsabscheiders weiter zu erhöhen, können in seinem Inneren sogenannte Füllkörper vorgesehen sein. Für diesen Zweck können beispielsweise Blockelemente aus Kunststoff Verwendung finden, die in bekannter Weise für das Be- und Entgasen von Flüssigkeiten eingesetzt werden. Diese Füllkörper bilden ein gitterartiges Netzwerk, das einen niedrigen Druckverlust, einen großen Flüssigkeitsdurchsatz und eine gute Flüssigkeitsverteilung sichert. Sie werden insbesondere hinter der Trennwand (Feinabscheiderstufe) eingesetzt, oder wenn vor dem Abscheider eine Pumpe zur Anwendung kommt. Derartige Füllkörper (Koaleszenzkörper) sind an sich bekannt und bereits zu den vorstehend angedeuteten Zwecken, beispielsweise in Kläranlagen, eingesetzt worden. Ihr Einsatz in Leichtflüssigkeitsabscheidern ist jedoch neu.

Bei einer weiteren Ausführungsform der Erfindung ist ein Leichtflüssigkeitsablauf vorgesehen, der zusätslich zu der nach unten offenen Leichtflüssigkeitswanne und dem daran ausgehenden Steigrohr eine Leichtflüssigkeitsrückhaltebechen, mindestens ein von diesem nach unten führendes Tauchrohr für die Leichtflüssigkeit, das mit seinem unteren Ende in eine Leichtflüssigkeitsausgleichskammer mündet, und ein von der Leichtflüssigkeitsausgleichskammer aufwärts führendes Leichtflüssigkeitsablaufrohr umfasst. Das Leichtflüssigkeitsrückhaltebechen ist hierbei im Bereich der Schwerflüssigkeitsschwankungen angeordnet. Die aufschwimmende Leichtflüssigkeit wird bei sinkendem Schwerflüssigkeitsspiegel vom Leichtflüssigkeitsrückhaltebechen aufgenommen und dem Tauchrohr zugeführt. Derjenige Teil der Leichtflüssigkeit, der den Inhalt des Tauchrohres übersteigt, fließt in die Leichtflüssigkeitsausgleichskammer und von dort in das Leichtflüssigkeitsablaufrohr. Anstelle eines Tauchrohres kann naturgemäß auch ein entsprechender Kanal bzw. Schacht vorgesehen sein. Die Länge des Tauchrohres entspricht der höchstmöglichen Leichtflüssigkeitssäule unter und über dem Schwerflüssigkeitsspiegel. In jedem Falle bezweckt die Lehre der Erfindung die Anordnung eines Leichtflüssigkeitsrückhaltebechens mit möglichst großem Volumen in einer Höhe, daß die über dem Schwerflüssigkeitsspiegel befindliche Leichtflüssigkeitsmenge zurückgehalten werden kann, und die Anordnung eines Tauchrohres zum Aufbau einer möglichst hohen Leichtflüssigkeitssäule.

Wenn eine Leichtflüssigkeitssammelkammer vorgesehen wird, so wird diese zweckmäßigerweise außerhalb des eigentlichen Abscheiders angeordnet, so daß im Abscheider mehr Raum für dessen eigentliche Funktion zur Verfügung steht. Die Sammelkammer kann dabei in der Form eines Behälters und insbesondere als Teil des ohnehin vorgesehenen Leichtflüssigkeitsspeichers ausgebildet sein.

Der erfindungsgemäß vorgesehene Zulaufverteiler (Kasten) dient gleichzeitig als Geruchsverschluß.

Durch die Füllkörper wird die Strömungsregulierung im Abscheider verbessert. Es kann hierdurch ein speziell vorgesehener Nachreiniger entfallen.

Insgesamt schlägt daher die Erfindung einen selbsttätig wirkenden Abscheider vor, der weitestgehend wartungsfrei ist und überhaupt keine beweglichen Teile aufweist.

Die Erfindung wird nachfolgend anhand von Ausführungsbeispielen in Verbindung mit der Zeichnung im einzelnen erläutert. Es zeigen:

Figur 1     einen Schnitt durch einen Leichtflüssigkeitsabscheider mit Zulaufschleusenwand;

Figur 2     einen Schnitt wie Fig. 1 mit abgewinkelter Zulaufschleusendwand;

Figur 3     einen Schnitt wie Fig. 1 mit seitlichem Zulauf des Abscheiders;

Figur 4     einen Schnitt durch eine weitere Ausführungsform eines Abscheiders;

Figur 5     zwei Schnittansichten eines mit einem Zulaufverteiler versehenen Abscheiders;

Figur 6     zwei Schnittansichten eines weiteren Ausführungsbeispiels eines Abscheiders, der mit einer anderen Ausführungsform eines Leichtflüssigkeitsablaufs versehen ist;

Figur 7     einen Schnitt durch eine weitere Ausführungsform eines Abscheiders mit anderem Leichtflüssigkeitsablauf;

Figur 8     einen Querschnitt durch den Abscheider der Figur 7; und

Figur 9     eine Draufsicht auf den Abscheider der Figuren 7 und 8.

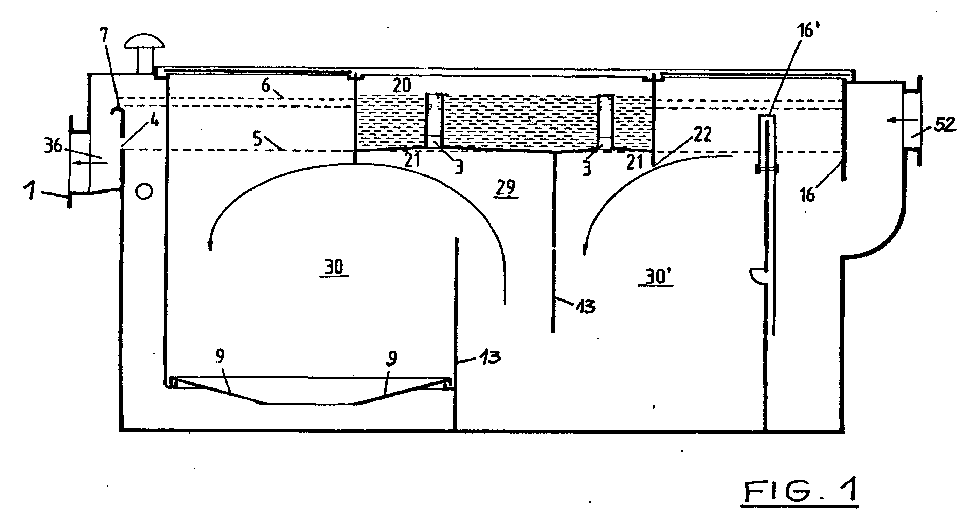

Der in Figur 1 gezeigte Leichtflüssigkeitsabscheider besitzt einen Zulauf 52 für ein Leichtflüssigkeits/Schwer flüssigkeitsgemisch, eine Abscheidekammer und einen Schwerflüssigkeitsablauf 1 sowie einen Leichtflüssigkeitsablauf, der bei diesem Ausführungsbeispiel zwei nach unten zur Abscheidekammer hin offene Leichtflüssigkeitswannen 21 umfaßt, von denen jeweils ein Steigrohr 3 ausgeht. Die Leichtflussigkeitswannen 21 besitzen äußere Begrenzungswände 22, die nach unten in die Abscheidekammer vorstehen. Die beiden Steigrohre 28 münden in ein Leichtflüssigkeitssammelbecken 20, das über den beiden Leichtflüssigkeitswannen 21 angeordnet ist.

Die Abscheidekammer weist zwei vertikal angeordnete Trennwände 13 auf, die die Kammer in eine Grobabscheidekammer 30' und eine Feinabscheidekammer 30 unterteilen. Am unteren Ende der Feinabscheidekammer 30 befindet sich eine schiefe Ebene 9, die einen mittigen Durchlaß für die Schwerflüssigkeit aufweist. Die Schwerflüssigkeit gelangt von dort über einen Schacht zum Schwerflüssigkeitsablauf 1, wobei sie die Überlaufkante einer dem Ablauf vorgeschalteten Schleusenwand 7 überströmt. An der Ablaufseite der Schleusenwand 7 befindet sich ein Sammelraum 36. In der Schleusenwand 7 ist unterhalb der Überlaufkante eine kleine Durchflußöffnung 4 vorgesehen. Im Ruhezustand des Abscheiders fließt durch diese Öffnung 4 Schwerflüssigkeit zum Ablauf 1 ab.

Bei dieser Ausführungsform ist dem Zulauf 52 eine sich über die gesamte Abscheidekammerbreite erstreckende Zulaufschleusenwand 16' nachgeschaltet, vor der sich eine vom zufließenden Gemisch unterströmte Trennwand 16 befindet. Bei Inbetriebnahme des Abscheiders unterströmt das Gemisch die Trennwand 16 und gelangt ohne störenden Einfluß auf die sich in der Abscheidekammer ausbildende Leichtflüssigkeitsschicht in die Grobabscheidekammer 30'.

Im Gegensatz zur Ablaufschleusenwand 7, bei der ein freier Schwerflüssigkeitsfall erwünscht ist, um Stauungen zu vermeiden, muß bei der Zulaufschleusenwand 16' ein freier Wasserfall vermieden werden.

Der Abscheider funktioniert in der folgenden Weise: Das Leichtflüssigkeits/Schwerflüssigkeitsgemisch strömt über den Zulauf in die Grobabscheidekammer 26' und verteilt sich über die Breite des Abscheiders. Mitgeführte Leichtflüssigkeit steigt an die Oberfläche und sammelt sich in den Leichtflussigkeitswannen an. Sobald die angesammelte Leichtflussigkeitssäule die Höhe des jeweiligen Steigrohres 3 übersteigt, fließt die Leichtflüssigkeit in das Leichtflüssigkeitssammelbecken 20 ab.

Je nach der Höhe der Durchflußöffnung 4 in der Schleusenwand 7 kann die Höhe der Leichtflussigkeitssäule festgelegt werden, und zwar so, daß die Leichtflüssigkeitswannen 21 während des Betriebes leichtflüssigkeitsfrei bleiben. Außerhalb der Leichtflüssigkeitswannen 21 anfallende Leichtflüssigkeit wird im Ruhezustand, d. h. bei auf das Niveau 5 der Durchflußöffnung 4 absinkendem Schwerflussigkeitsspiegel, von den Leichtflüssigkeitswannen 21 aufgenommen und bei Inbetriebnahme des Abscheiders durch Anstieg des Schwerflüssigkeitsspiegels auf das Niveau 6 bis auf einen kleinen Rest Leichtflüssigkeitssäule in den Steigrohren 3 zum Ablauf gebracht.

Leichtflüssigkeitsbestandteile, die von der Strömung der Schwerflüssigkeit mitgeführt werden, trennen sich nach Beruhigung der Schwerflüssigkeit, steigen auf und fliessen über den Leichtflüssigkeitsablauf ab.

Schwerere Leichtflüssigkeitsteilchen werden von der Schwerflüssigkeit im Bereich 29 zwischen den beiden Trennwänden 13 gegen die Unterseite der Leichtflüssigkeitsschicht geführt und verbinden sich mit dieser. Nach Aufbau der entsprechenden Leichtflüssigkeitssäulenhöhe fließt diese Leichtflüssigkeit ebenfalls in das Becken 20 ab.

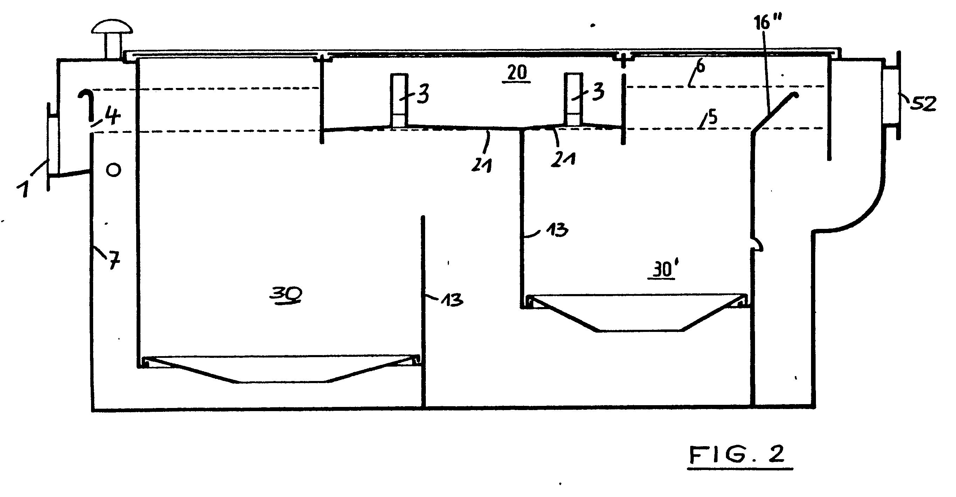

Bei dem in Figur 2 dargestellten Ausführungsbeispiel ist die Zulaufschleusenwand 16'' im Bereich des unteren Schwerflüssigkeitsspiegels 5 um 45° abgewinkelt. Durch diese schiefe Ebene wird ein freier Schwerflüssigkeitsfall bei Inbetriebnahme des Abscheiders verhindert, so daß Turbulenzen in der ansteigenden Leichtflüssigkeitsschicht vermieden werden können. Die Oberkante der Zulaufschleusenwand 16'' liegt tiefer als die der Ablaufschleusenwand 7, so daß im Betrieb die Leichtflüssigkeitsschicht vom Zulauf unterströmt wird.

Bei dieser Ausführungsform ist wie in der Feinabscheidekammer 30 auch in der Grobabscheidekammer 30' ein strömungsregulierender Einlegeboden als schiefe Ebene 9 vorgesehen.

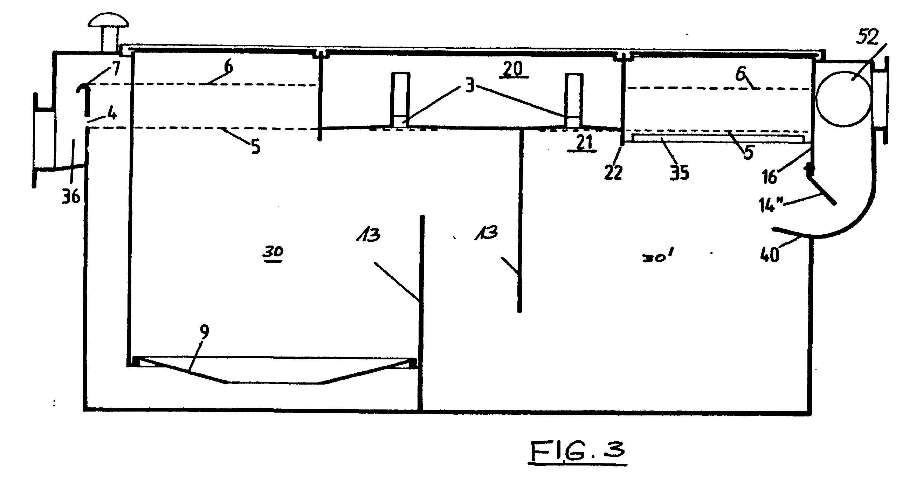

Die in Figur 3 dargestellte Ausführungsform ist mit einem seitlichen Zulauf 52 versehen, der wahlweise Anwendung finden kann. Entschließt man sich zu einem Stirnwandzulauf, so kann zur besseren Verteilung der Zulaufmenge ein austauschbares Leitblech 14'' eingesetzt werden, welches zur Mitte des Querschnitts rund oder spitz (dreieckig) breiter wird. Dadurch wird der Querschnitt in der Mitte, also der Hauptströmung, eingeengt und zu beiden Seiten langsam ansteigend der ganze Querschnitt freigegeben. Besonders bei breiten Abscheidern verhindert diese Vorrichtung ein Totliegen der Seitenräume.

Das verlängerte Zuflußbodenende 40 begünstigt das Aufsteigen der Leichtflüssigkeit. Eine L-Eisen-Auflage 35 ermöglicht die nachträglich Einbringung einer zusätzlichen Ablaufvorrichtung.

Die Ausführungsform gemäß Figur 3 wird bei geringem Leichtflüssigkeitsanfall vorgesehen. Der größere Zuflußraum vermindert Turbulenzen und senkt die Strömungsgeschwindigkeit ab. Der größte Teil der Leichtflüssigkeit steigt sofort zur Schwerflüssigkeitsoberfläche 6 und wird während des Betriebes dort angesammelt.

Die Schwerflüssigkeit gelangt in die Feinabscheidekammer 30. Hierbei setzt sich Restschlamm und Sand am Boden ab. Je nach Schlammanfall kann der Raum so groß dimensioniert werden, daß auf einen zusätzlichen Schlammfang verzichtet werden kann.

Schwere Leichtflüssigkeitsteilchen, die von der Schwerflüssigkeit während des Betriebes über die untere Kante der Wand 22 in die Wanne 21 mitgeführt werden, sammeln sich im Steigrohr 3. Sobald eine bestimmte Leichtflüssigkeitssäule erreicht ist, läuft die hinzugekommene Leichtflüssigkeit in das Leichtflüssigkeitssammelbecken 20 ab.

Im Ruhezustand vereinigt sich die gesamte im Betrieb im Abscheider verbliebene Leichtflüssigkeit zu einer gemeinsamen Leichtflüssigkeitsschicht auf dem unteren Schwerflüssigkeitsspiegel 5. Bei einer entsprechenden Leichtflüssigkeitsschichtdicke läuft die Leichtflüssigkeit über die untere Kante der Wand 22 in die Wanne 21 und von da über das Steigrohr in das Sammelbecken 20.

Sollte sich im Laufe der Zeit der Leichtflüssigkeitsanfall erhöhen, wird auch in der Grobabscheidekammer 30' eine entsprechende Leichtflüssigkeitswanne 21 auf der Auflage 35 angebracht. Diese Wanne übernimmt dann den Ablauf des weitaus größten Teils der anfallenden Leichtflüssigkeit.

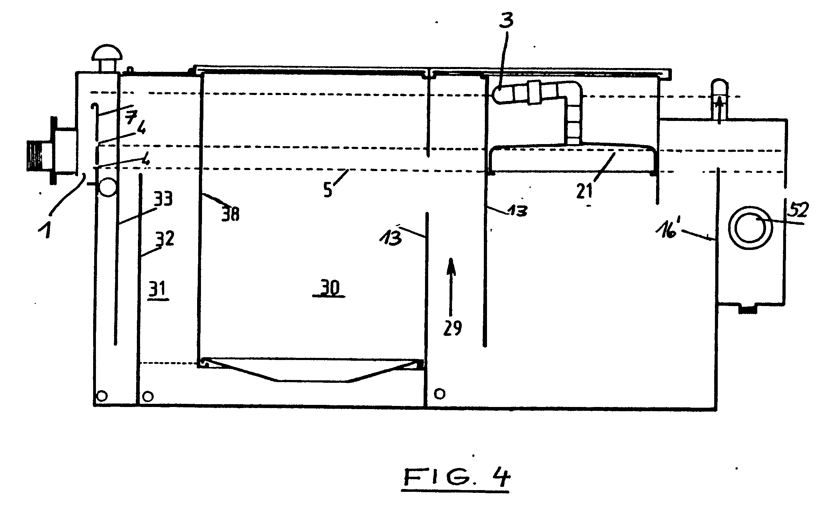

Bei der Ausführungsform der Figur 4 ist nach der Feinabscheidekammer 30' eine Restabscheiderstufe 31 in der Form eines Reinigungskanales vorgesehen. Dieser Kanal wird mit bekanntem Leichtflüssigkeitsfiltermaterial oder mit Leichtflüssigkeitsbindemittel bestückt und ist für den Bedarfsfall gedacht. Die Restabscheiderstufe 31 wird durch weitere Trennwände 32, 33 und 38 gebildet.

Bei der vorliegenden Ausführungsform ist die Restabscheiderstufe 31 (Nachreinigungskammer) direkt mit dem übrigen Abscheider verbunden. Die Durchströmung erfolgt über die ganze Breite des Abscheiders.

Diese Ausführungsform wird vorzugsweise dann eingesetzt, wenn mit großem Leichtflüssigkeitsanfall zu rechnen ist, wie beispielsweise Leichtflüssigkeitsunfällen etc.

Darüberhinaus besitzt diese Ausführungsform in der Ablaufschleusenwand 7 zwei übereinander angeordnete kleine Durchflußöffnungen 4.

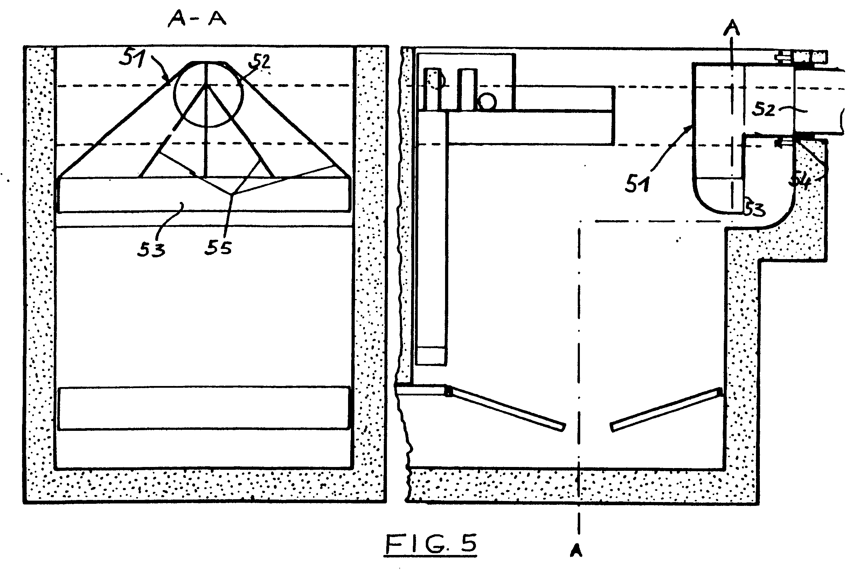

In Figur 5 ist eine Ausführungsform eines Abscheiders dargestellt, der einen Zulaufverteiler 51 aufweist. Der Zulaufverteiler 51 ist hierbei über eine Stopfbüchsendichtung 54 in beweglicher und abgedichteter Weise an dem Zulaufrohr 52, das ein übliches Kunststoffrohr sein kann, gelagert. Der Zulaufverteiler besitzt im wesentlichen die Form eines Kastens, der sich nahezu über die gesamte Breite des Abscheiders erstreckt und das zugeleitete Flüssigkeitsgemisch über die Breite des Abscheiders gleichmäßig verteilt. Um diese Verteilung zu erreichen, sind schrägabwärtsweisende Leitbleche 55 vorgesehen, die das Flüssigkeitsgemisch zum Auslauf 53 des Zulaufverteilers leiten. Durch den Zulaufverteiler erfolgt eine Umlenkung der Strömung des Flüssigkeitsgemisches um 360°, so daß dieses in entgegengesetzer Richtung wie die einströmende Flüssigkeit aus dem Verteiler austritt. Die Leitbleche laufen sternförmig auf einen gemeinsamen Punkt zu, der im Querschnittsbereich des Zulaufrohres 52 angeordnet ist.

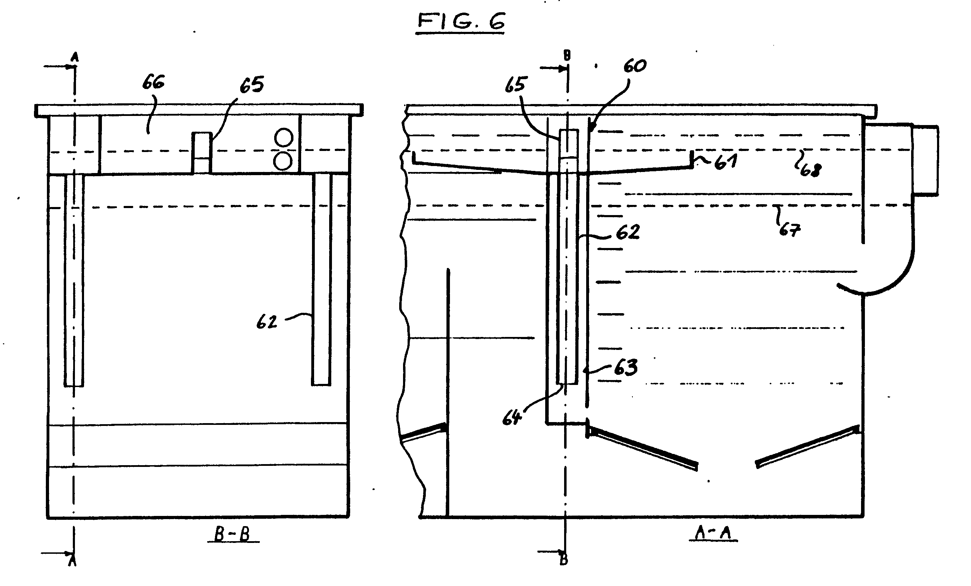

In Figur 6 ist ein Abscheider dargestellt, der einen Leichtflüssigkeitsablauf für einen kontinuierlichen Leichtflüssigkeitsabfluß besitzt, welcher zusätzlich zu dem in Verbindung mit den vorstehenden Ausführungsformen beschriebenen Leichtflüssigkeitsablauf mit unten offener Leichtflüssigkeitswanne und davon ausgehendem Steigrohr weitere Bauteile besitzt, gemäß denen die Leichtflüssigkeit von der Schwerflüssigkeitsoberfläche durch pumpenartige Vorgänge unter Ausnutzung der Schwerflüssigkeitsspiegelschwankungen bis tief unter den Schwerflüssigkeitsspiegel und von dort über den Schwerflüssigkeitsspiegel zum Ablaufen gebracht wird. Dieser zusätzliche Leichtflüssigkeitsablauf umfaßt bei diesem Ausführungsbeispiel zwei Leichtflüssigkeitsrückhaltebecken 61 , zwei Tauchrohre 62, eine Leichtflüssigkeitsausgleichskammer 63 und ein Leichtflüssigkeitsablaufrohr 65 (Steigrohr). Desweiteren ist eine Leichtflüssigkeitssammelkammer 66 vorgesehen, in die das Leichtflussigkeitsablaufrohr 65 mündet.

Beim geringsten Durchgang durch den Abscheider (ca. 0,1 l/sec) steigt der Schwerflüssigkeitsspiegel vom Ruhezustand 67 auf Betriebszustand 68. Bei Betriebsstop wird die aufschwimmende Leichtflüssigkeit bei sinkendem Schwerflüssigkeitsspiegel im Bereich der Leichtflüssigkeitsrückhaltebecken 61 aufgenommen und den Öffnungen der Tauchrohre 62 zugeführt. Derjenige Anteil der Leichtflüssigkeit, der den Inhalt der Tauchrohre 62 übersteigt, fließt in die Leichtflüssigkeitsausgleichskammer 63. Die Länge der Tauchrohre entspricht der höchstmöglichen Leichtflüssigkeitssäule von 54 cm unter dem Schwerflüssigkeitsspiegel und 9,5 cm über dem Schwerflüssigkeitsspiegel 67 bei einer Dichte von 0,85 g/cm³.

Wenn die Leichtflüssigkeitsausgleichskammer 63 bis zur höchstmöglichen Leichtflüssigkeitssäulenhöhe angefüllt ist und dem Abscheider 0,1 l/sec Flüssigkeitsgemisch zugeführt werden, steigt der Schwerflüssigkeitsspiegel von 67 auf 68. In diesem Bereich läuft bereits aus der Leichtflüssigkeitsausgleichskammer 63 bei einer Dichte von 0,85 g/cm³ ca. 16 l Leichtflüssigkeit ab.

Durch die vorgegebenen Schwankungen ist der Leichtflüssigkeitsablauf gesichert, denn die Leichtflüssigkeit läuft bereits über das Rohr 65 ab, bevor der Schwerflüssigkeitsspiegel 68 den Überlauf der Ablaufschleusenwand erreicht hat. Je geringer der Durchgang, desto höher ist die erforderliche Leichtflüssigkeitssäule; je höher der Durchgang, desto geringer ist die erforderliche Leichtflüssigkeitssäule

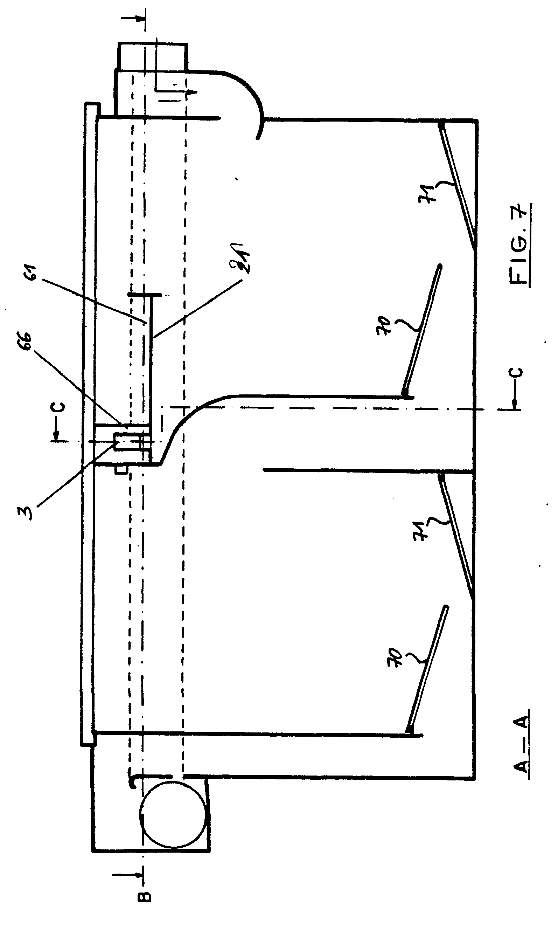

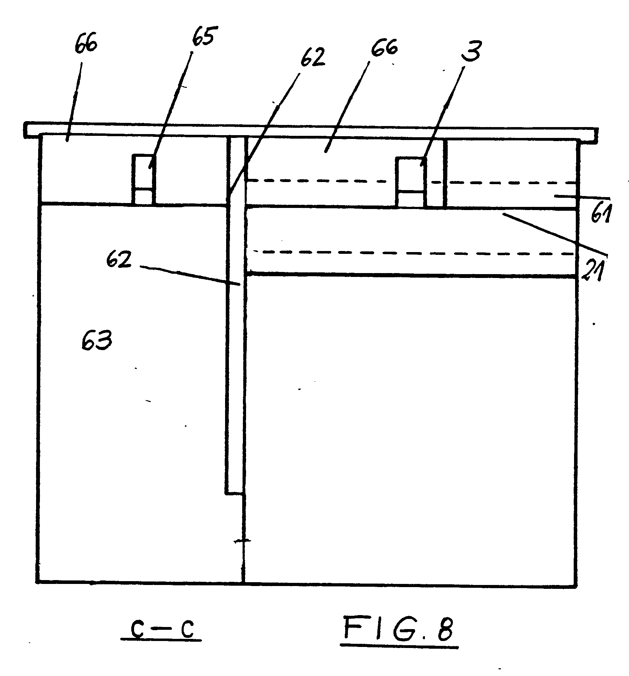

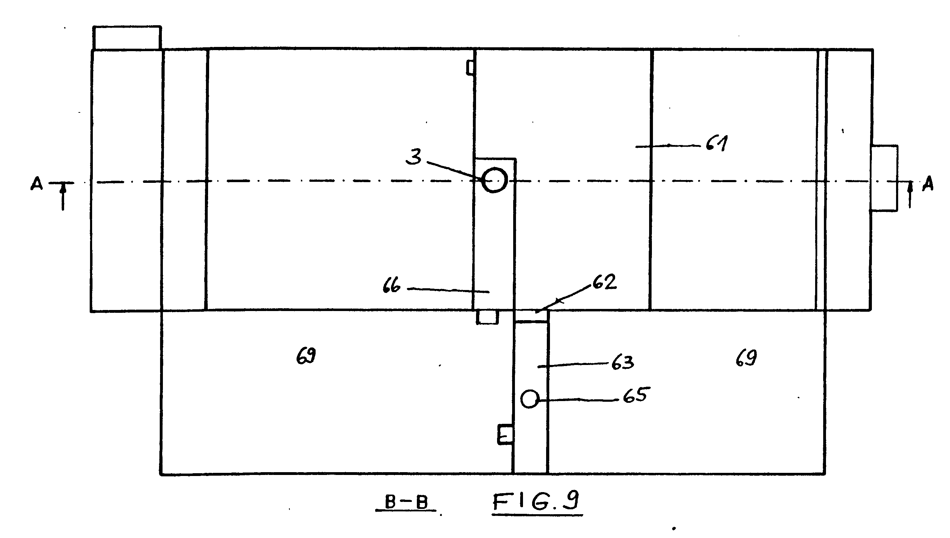

Die Figuren 7 bis 9 zeigen eine Ausführungsform eines Abscheiders, der einen Leichtflüssigkeitsablauf aufweist, der im Prinzip wie der vorstehend in Verbindung mit Figur 6 beschriebene Ablauf funktioniert. Hierbei sind jedoch die Leichtflüssigkeitsausgleichskammer 63 in der Form eines Behälters und ein Leichtflüssigkeitssammeltank 96 ausserhalb des eigentlichen Abscheiders angeordnet.

Wie man Figur 7 entnehmen kann, kommt bei dieser Ausführungsform noch eine spezielle Art der Ausbildung der schiefen Ebene zum Einsatz. Bei dieser Ausführungsform sind die beiden Hälften 70, 71 der schiefen Ebene nicht auf gleicher Höhe angeordnet, so daß sich eine symmetrische Ausführungsform ergibt, sondern die rechte Hälfte 71 der Ebene ist tiefer angeordnet als die linke Hälfte 70. Die rechte Hälfte liegt dabei mit dem unteren Ende auf dem Boden des Abscheiders auf, während das höher gelegene Ende an der Trennwand bzw. Außenwand des Abscheiders befestigt ist. Auf diese Weise ergibt sich eine bessere Raumausnutzung des Abscheiders.

## Patentansprüche

1. Leichtflüssigkeitsabscheider, bei dem der Zu- und Ablauf eine geringere Breite aufweisen als die Abscheidekammer, dem Schwerflüssigkeitsablauf eine sich über die gesamte Breite der Abscheidekammer erstreckende Schleusenwand (7) vorgeschaltet ist, die an ihrer Ablaufseite über die gesamte Breite einen ausreichenden freien Fall der Schwerflüssigkeit ermöglicht, die Abscheidekammer mindestens eine vertikal angeordnete Trennwand (13) umfaßt, die sich über deren gesamte Breite erstreckt, und der Leichtflüssigkeitsablauf eine nach unten zur Abscheidekammer hin offene Leichtflüssigkeitswanne aufweist, von der ein Steigrohr ausgeht, dadurch gekennzeichnet, daß in der Schleusenwand (7) unterhalb der Überlaufkante eine kleine Durchflußöffnung (4) vorgesehen ist, die Eintrittstelle des Steigrohres (28) zwischen dem Niveau der Unterkante der Durchflußöffnung (4) und dem Niveau der Überlaufkante liegt und in der Abscheidekammer in Richtung auf den Schwerflüssigkeitsablauf eine einen Durchlaß für die Schwerflüssigkeit aufweisende zwei- oder vierseitig schiefe Ebene (9) angeordnet ist.

2. Leichtflüssigkeitsabscheider nach Anspruch 1, dadurch gekennzeichnet, daß dem Zulauf (52) eine sich über die gesamte Abscheidekammerbreite erstreckende Zulaufschleusenwand (16', 16'') zugeordnet ist.

3. Leichtflüssigkeitsabscheider nach einem der vorangehenden Ansprüche, dadurch gekennzeichnet, daß an der Ablaufseite der Schleusenwand (7) ein Sammelraum (36) vorgesehen ist.

4. Leichtflüssigkeitsabscheider nach einem der vorangehenden Ansprüche, dadurch gekennzeichnet, daß er eine sich über die gesamte Breite der Abscheidekammer erstreckende Restabscheiderstufe (31) zur Aufnahme von Filter- oder Ölbindematerial unmittelbar nach einer weiteren Trennwand (38) der Abscheidekammer aufweist.

5. Leichtflüssigkeitsabscheider nach einem der vorangehenden Ansprüche, dadurch gekennzeichnet, daß er ein Leichtflüssigkeitssammelbecken (20) aufweist, unter dem sich eine oder mehrere Leichflüssigkeitswannen (21) befinden.

6. Leichtflüssigkeitsabscheider nach einem der vorangehenden Ansprüche, dadurch gekennzeichnet, daß er einen als Verteilerstern ausgebildeten Zulaufverteiler (51) aufweist, der einen sich über die Breite des Abscheiders erstreckenden Kasten umfaßt, in den der Zulauf (52) eingeführt ist und der sternförmig angeordnete, schräg abwärts geneigte Leitbleche (55) aufweist.

7. Leichtflüssigkeitsabscheider nach einem der vorangehenden Ansprüche, dadurch gekennzeichnet, daß beiderseits der Trennwand (13) eine schiefe Ebene (9) vorgesehen ist.

8. Leichtflüssigkeitsabscheider nach einem der vorangehenden Ansprüche, dadurch gekennzeichnet, daß die beiden Hälften (70, 71) der schiefen Ebene (9) höhenversetzt angeordnet sind, so daß die tiefsten Punkte der Hälften einen Vertikalabstand voneinander aufweisen, wobei die eine Hälfte (71) mit ihrem tiefsten Punkt am Boden des Abscheiders aufliegt.

9. Leichtflüssigkeitsabscheider nach einem der vorangehenden Ansprüche, dadurch gekennzeichnet, daß in seinem Inneren Füllkörper, insbesondere gitterförmige Blockelemente aus Kunststoff, angeordnet sind.

10. Leichtflüssigkeitsabscheider nach einem der vorangehenden Ansprüche, dadurch gekennzeichnet, daß der Leichtflüssigkeitsablauf ein Leichtflüssigkeitsrückhaltebecken (61), mindestens ein von diesem nach unten führendes Tauchrohr (62) für die Leichtflüssigkeit, das mit seinem unteren Ende (64) in eine Leichtflüssigkeitsausgleichskammer (63) mündet, und ein von der Leichtflüssigkeitsausgleichskammer (63) aufwärts führendes Leichtflüssigkeitsablaufrohr (65) umfaßt.

11. Leichtflüssigkeitsabscheider nach Anspruch 10, dadurch gekennzeichnet, daß das Leichtflüssigkeitsablaufrohr (65) in eine Leichtflüssigkeitssammelkammer (66) mündet.

12. Leichtflüssigkeitsabscheider nach Anspruch 10 oder 11, dadurch gekennzeichnet, daß die Länge des Tauchrohres (62) der höchst möglichen Leichtflüssigkeitssäule unter und über dem Schwerflüssigkeitsspiegel entspricht.

13. Leichtflüssigkeitsabscheider nach einem der Ansprüche 10 bis 12, dadurch gekennzeichnet, daß die Leichtflüssigkeitssammelkammer (66) als Behälter ausgebildet und an der Außenseite des Abscheiders angeordnet ist, wobei der Behälter gleichzeitig einen Teil des Leichtflüssigkeitsspeichers ersetzt.

## Claims

1. A light liquid separator of which the inlet and outlet have a smaller width than the separator chamber, the heavy liquid outlet having a sluice wall (7) extending about the whole width of the separator chamber and disposed in front of the heavy liquid outlet, said sluice wall (7) enabling at its discharge side a sufficient free fall of the heavy liquid about the whole width, the separator chamber comprising at least one vertically disposed partition (13) extending about the whole width of the separator chamber, and the light liquid outlet comprising a light liquid trough which opens downwardly towards the separator chamber and from which a rising pipe emanates, characterized in that a small flow opening (4) is provided in said sluice wall (7) below the overflow edge, in that the inlet location of said rising pipe (28) is situated between the level of the lower edge of said flow opening (4) and the level of said overflow edge, and in that an inclined plane (9) having two or four sides is located in said separator chamber towards the heavy liquid outlet, said inclined plane including a passage for the heavy liquid.

2. The light liquid separator according to claim 1, characterized in that said inlet (52) is associated with an inlet sluice wall (16', 16") extending about the whole width of the separator chamber.

3. The light liquid separator according to one of the preceding claims, characterized in that a collecting space (36) is located at the discharge side of said sluice wall (7).

4. The light liquid separator according to one of the preceding claims, characterized in that it includes a rest separator stage (31) for the receipt of filter material or oil binding material directly after a further partition (38) of said separator chamber, said rest separator stage extending about the whole width of said separator chamber.

5. The light liquid separator according to one of the preceding claims, characterized in that it comprises a liquid collecting basin (20), and that one or plurality of light liquid troughs (21) are located below said light liquid collecting basin.

6. The light liquid separator according to one of the preceding claims, characterized in that it comprises an inlet distributor (51) formed as distributor star, said inlet distributor having a box extending about the width of the separator, said box beeing provided with an introduced inlet (52) and with downwardly inclined guide plates (55) located in a star-like manner.

7. The light liquid separator according to one of the preceding claims, characterized in that an inclined plane (9) is provided on both sides of the partition (13).

8. The light liquid separator according to one of the preceding claims, characterized in that the two halfs (70, 71) of said inclined plane (9) are located on different levels so that the lowest points of the halfs are vertically spaced from one another, one half (71) lying with its lowest point on the bottom of the separator.

9. The light liquid separator according to one of the preceding claims, characterized in that packings, especially grid-like block members made of plastics, are located within its interior.

10. The light liquid separator according to one of the preceding claims, characterized in that said light liquid outlet comprises a light liquid retaining basin (61), at least one dip tube (62) for the light liquid extending downwardly from said light liquid retaining basin and opening with its lower end (64) into a light liquid balance chamber (63), and a light liquid discharge tube (65) extending upwardly from said light liquid balance chamber (63).

11. The light liquid separator according to claim 10, characterized in that said light liquid discharge tube (65) opens into a light liquid collecting chamber (66).

12. The light liquid separator according to claim 10 or 11, characterized in that the lenght of said dip tube (62) corresponds to the highest possible light liquid column below and above the heavy liquid level.

13. The light liquid separator according to one of the claims 10 to 12, characterized in that said light liquid collecting chamber (66) is formed as a container and is located at the outside of the separator, said container simultaneously replacing a portion of the light liquid reservoir.

**Revendications**

1. Séparateur de liquides légers, dans lequel l'arrivée et le départ présentent une largeur inférieure à celle de la chambre de séparation, en avant du départ de liquide lourd duquel est disposée une paroi d'écluse (7) s'étendant sur toute la largeur de la chambre de séparation, cette paroi permettant, de son côté de départ, sur toute sa largeur, une chute libre suffisante du liquide lourd, la chambre de séparation englobant au moins une paroi de séparation (13) disposée verticalement, qui s'étend sur toute sa largeur, et le départ de liquide léger présentant une auge pour le liquide léger, ouverte vers le bas, vers la chambre de séparation, d'où part un conduit ascendant, caractérisé en ce que, dans la paroi d'écluse (7), il est prévu, en dessous de son arête de déversement, une petite ouverture (4) de passage d'écoulement, en ce que le point d'entrée du conduit ascendant (28) se trouve entre le niveau du bord inférieur de l'ouverture de passage (4) et le niveau de l'arête de déversement, et en ce que, dans la chambre de séparation, en direction du départ du liquide lourd, est disposé un plan oblique (9), à deux ou à quatre côtés, comportant un passage pour le liquide lourd.

2. Séparateur de liquides légers suivant la revendication 1, caractérisé en ce qu'à l'arrivée (52) est associée une paroi d'écluse d'arrivée (16', 16'') s'étendant sur toute la largeur de la chambre de séparation.

3. Séparateur de liquides légers suivant l'une des revendications précédentes, caractérisé en ce que, du côté de départ de la paroi d'écluse (7) est prévue une chambre collectrice (36).

4. Séparateur de liquides légers suivant l'une des revendications précédentes, caractérisé en ce qu'il comporte, immédiatement après une autre paroi de séparation (38) de la chambre de séparation, un étage de séparation résiduel (31) s'étendant sur toute la largeur de la chambre de séparation, pour recevoir de la matière de filtrage ou des liants à l'huile.

5. Séparateur de liquides légers suivant l'une des revendications précédentes, caractérisé en ce qu'il comporte un bassin (20) collecteur de liquide léger, sous lequel se trouvent une ou plusieurs auges (21) pour le liquide léger.

6. Séparateur de liquides légers suivant l'une des revendications précédentes, caractérisé en ce qu'il comporte un distributeur d'arrivée (51) conformé en étoile de répartition, qui comprend un caisson s'étendant sur la largeur du séparateur, dans lequel est introduite l'arrivée (52) et qui comporte des tôles déflectrices (55) disposées en forme d'étoile et inclinées obliquement vers le bas.

7. Séparateur de liquides légers suivant l'une des revendications précédentes, caractérisé en ce que des deux côtés de la paroi de séparation (13) est prévu un plan incliné (9).

8. Séparateur de liquides légers suivant l'une des revendications précédentes, caractérisé en ce que les deux moitiés (70, 71) des plans inclinés (9) sont décalées en hauteur, en sorte que les points les plus bas des moitiés présentent entre eux un écart vertical, l'une des moitiés (71) se posant, par son point le plus bas, sur le fond du séparateur.

9. Séparateur de liquides légers suivant l'une des revendications précédentes, caractérisé en ce que, dans son intérieur, sont disposés des corps de remplissage, en particulier des éléments en bloc de matière synthétique en forme de grille.

10. Séparateur de liquides légers suivant l'une des revendications précédentes, caractérisé en ce que le départ de liquide léger comprend un bassin (61) de retenue de liquide léger, au moins un tuyau plongeur (62) pour le liquide léger, conduisant de ce bassin vers le bas, qui, par son extrémité inférieure (64), débouche dans une chambre (63) d'égalisation de liquide léger, et comprend un tuyau de départ de liquide léger (65) conduisant vers le haut à partir de la chambre d'égalisation (63) de liquide léger.

11. Séparateur de liquides légers suivant la revendication 10, caractérisé en ce que le tuyau de départ (65) de liquide léger débouche dans une chambre collectrice (66) de liquide léger.

12. Séparateur de liquides légers suivant la revendication 10 ou 11, caractérisé en ce que la longueur du tuyau plongeur (62) correspond à la colonne de liquide léger la plus haute possible en dessous et au-dessus du niveau de liquide léger.

13. Séparateur de liquides légers suivant l'une des revendications 10 à 12, caractérisé en ce que la chambre collectrice (66) de liquide léger est conformée comme un récipient et est disposée du côté extérieur du séparateur, le récipient remplaçant en même temps une partie de l'accumulateur de liquide léger.

FIG. 1

FIG. 2

FIG. 3

FIG. 4

FIG. 5

FIG. 6

B-B

A-A

EP 0118021 B1

FIG. 7

A — A

c — c          FIG.8

FIG.9

B-B